# EUROPEAN PATENT APPLICATION

(11) **EP 1 798 927 A1**
(43) Date of publication of application: **20.06.2007**
(21) Application number: 05257807.7
(22) Date of filing: 19.12.2005
(51) Int. Cl.: H04L 29/06

(54) **Performing a transaction**

(71) Applicant: BRITISH TELECOMMUNICATIONS public limited company, London EC1A 7AJ (GB)
(72) Inventor: The designation of the inventor has not yet been filed
(74) Representative: Lofting, Coreena Fiona Anne

(57) **Abstract**

A transaction to purchase goods and services is carried out between a client (1) and a server (2). The transaction is defined in a transaction description protocol (TOP) which provides a pre-defined transaction descriptor object (TD) comprising a plurality of data fields to be completed by the user (Fig. 5). The fields can be completed in more than one session and in no particular order, using one or more proxies (3, 4) to provide a transaction descriptor instance of data for enabling performance of the transaction. Upon completion of the data fields of the TD by the user, the transaction descriptor instance is sent to the server, and the transaction is carried out by means of the server using the data from the transaction descriptor instance. The purchase of a compact disc over the Internet is described by way of example.

## Description

This invention relates to performing a transaction between a client and a server, for example through a network such as the Internet.

Transactions to purchase goods or services are presently carried out through the Internet using hypertext transmission protocol (HTTP) or secure transmission protocol (HTTPS) and involve a web browser and a web server, with a stream of HTTP requests and responses being passed between them to conduct a data conversation for the purpose of completing a specific transaction e.g. to purchase goods or a service. The state within the conversation or session is maintained by the server, typically using cookies stored on the browser and state information within a database connected to the server, to enable session tracking.

The problem with this approach is that if changes are required or invalid information is submitted during the conversation/session, then the user needs to step backwardly through the process to the point of the mistake or error or omission. There is a risk that the data entered by the user will be lost and need to be re-entered. Also, data often needs to be re-sent in its entirety in order to correct only one minor omission or error.

The present invention seeks to overcome these problems and difficulties.

According to the invention, there is provided a method of performing a transaction between a client and a server, comprising sending from the server to the client a pre-defined transaction descriptor comprising a plurality of data fields to be completed by the user to provide a transaction descriptor instance of data for enabling performance of the transaction, sending the transaction descriptor instance to the server upon completion of the data fields of the transaction descriptor by a user of the client to provide the data descriptor instance, and performing the transaction by means of the server using the data from the transaction descriptor instance.

The data fields can be completed in no particular order and in more than one session without the problem that data may be lost if there are errors and omissions.

The invention also includes a software object, a computer program, a network and a proxy configured to perform the aforesaid method.

The invention allows a plurality of goods and service offers from a server or different servers to be collated and offered to users by a server that operates as a proxy to provide a coordinated shopping service.

In order that the invention may be more fully understood, embodiment whereof will now be described by way of example with reference to the accompanying drawings, in which:
Figure 1 is a schematic illustration of a network for use in making a transaction according to the invention;
Figure 2 is a schematic block diagram of a client device for use in the network of Figure 1;
Figure 3 is a schematic illustration of a server for use in the network of Figure 1;
Figure 4 is a timing diagram of the steps performed during a transaction; and
Figure 5 is an illustration of a transaction descriptor for use in the transaction.

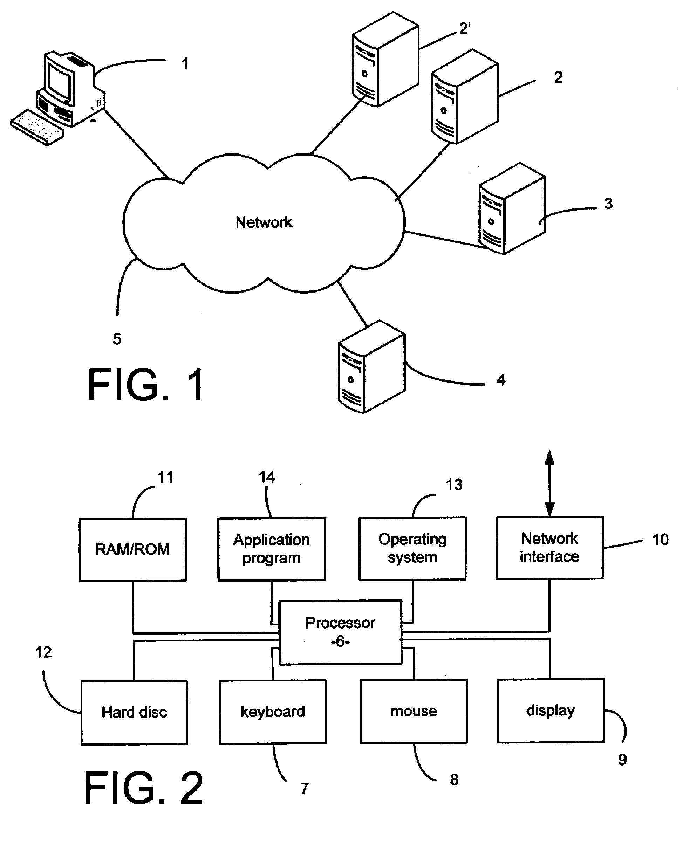

Figure 1 illustrates a network for use in carrying out a transaction. A client 1 can connect to one of a plurality of servers 2, 3, 4 through a network 5. The client 1 may comprise a personal computer as shown in Figure 1 but it will be understood that other devices can be used, for example mobile telecommunications devices, PDAs or laptop computers. The network 5 may comprise the Internet or other networks which conveniently may operate according to TCP/IP protocol or other data transmission protocols such as UDP, SIP, IMAP or others known in the art. The network 5 may be a fixed network or may include a mobile network such as a mobile telecommunications network or a wireless wide area or local network (WLAN or LAN).

In this example, the server 2 provides an Internet shopping service for the sale of goods and services to customers which access the server through a client device such as client device 1. It will be appreciated that a number of such servers may be accessed through the network 5, provided by different sales organisations to sell different goods and services. A further such server 2' is shown by way of illustration. Network servers 3, 4 provide a proxy service as described hereinafter. The server 3 may act as a banking server to provide the accreditation of user account details e.g. credit card details. The proxy server 4 provides an Internet shopping service.

Figure 2 illustrates the major component parts of the client device 1 shown in Figure 1. PC 1 includes a processor 6 controlled by a keyboard 7 and a mouse 8 to provide a display on display screen 9. The device is connected to the network 5 through a network interface 10. The memory in the form of RAM/ROM 11 together with hard disk 12 is provided for the processor 6, which runs an operating system 13 to permit the use of application programs 14. In this example, the application program 14 comprises a browser application, which acts as a client application for the servers 2, 3 and 4 shown in Figure 1.

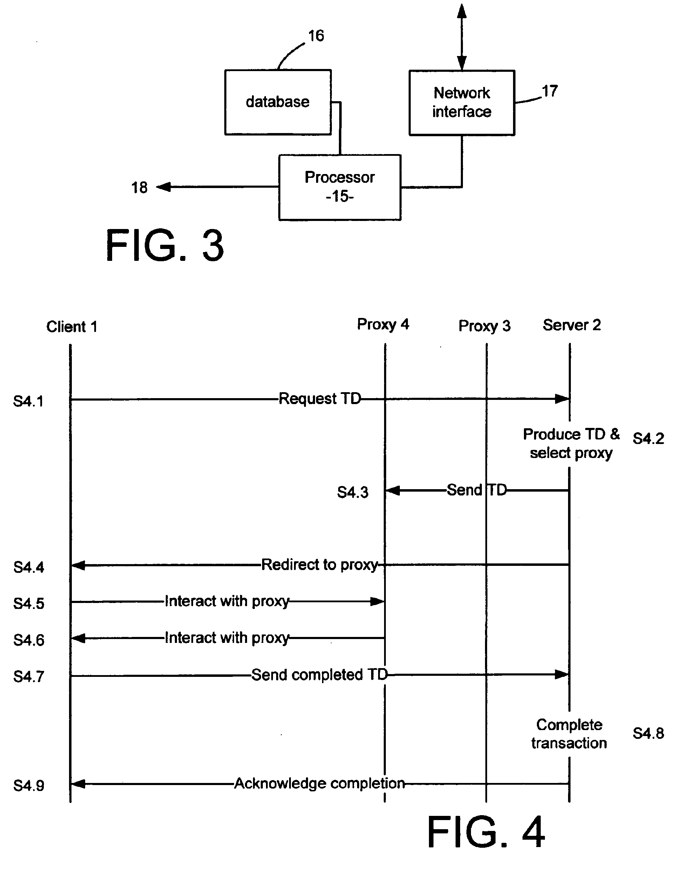

Figure 3 illustrates the major components of the server 2. A processor 15 is coupled to a database 16 and also to the network 5 through a network interface 17. When the client device 1 makes a purchase, instructions are sent to a warehouse (not shown) through connection 17 so that goods or service can be dispatched to the user of client device 1.

Communication between the client device 1 and one or more of the servers 2, 3, 4 may conveniently be performed using TCP/IP protocol in a manner known per se in the art, although other protocols can be used.

An example of a transaction according to the invention will now be described in which a user of client device 1 purchases goods through the agency of server 2.

In accordance with the invention, the transaction is performed making use of a transaction object protocol (TOP). The protocol enables the transaction to be defined in its entirety as a software object. An object corresponding to the transaction referred to herein as a transaction descriptor (TD) is provided to the client so that all the data appropriate for the transaction can be collated and provided in a single instance of the TD object, that can be transmitted to the server 2 in a single operation, to allow the server 2 to carry out the transaction efficiently without the need to make multiple requests for data from the client. The TOP can be run on the server 2, sitting in front of the existing services provided by the server. Alternatively, the TOP can be run as a proxy resident in the network 5, e.g. server 3 or 4 shown in Figure 1. Alternatively, the TOP can be run as a client proxy or a plug in for the client.

The TOP can also be used in peer-to-peer networks and ad-hoc networks as a proxy.

In the following example, the TOP is run using a proxy that comprises server 4 shown in Figure 1 and an example will now be given in more detail, in which the user of client device 1 wishes to purchase goods in the form of a compact disc (CD) from server 2.

Figure 4 illustrates the steps carried out during the transaction to purchase a particular CD by a user of client device 1, from server 2.

Initially, the user of client device 1 points the browser application to the universal resource locator (URL) of the homepage associated with server 2, so as to open a connection to the server 2 through the network 5. The homepage provides the client 1 with a number of options to purchase different types of goods and services. Each of the options has an associated TD written according to the transaction object protocol.

In step S4.1, the user of client device 1 selects an option to purchase a CD and as a result sends a request to server 2 for the TD associated with a purchase of a CD. At step S4.2, the server 2 produces the TD and also selects a proxy for use in carrying out the purchasing transaction. The selected TD is then sent to the selected proxy at step S4.3. In this example, the proxy comprises proxy server 4, which provides a shopping service.

At step S4.4, the server 2 sends a message to the browser application of client 1 to redirect its URL to that of the proxy server 4.

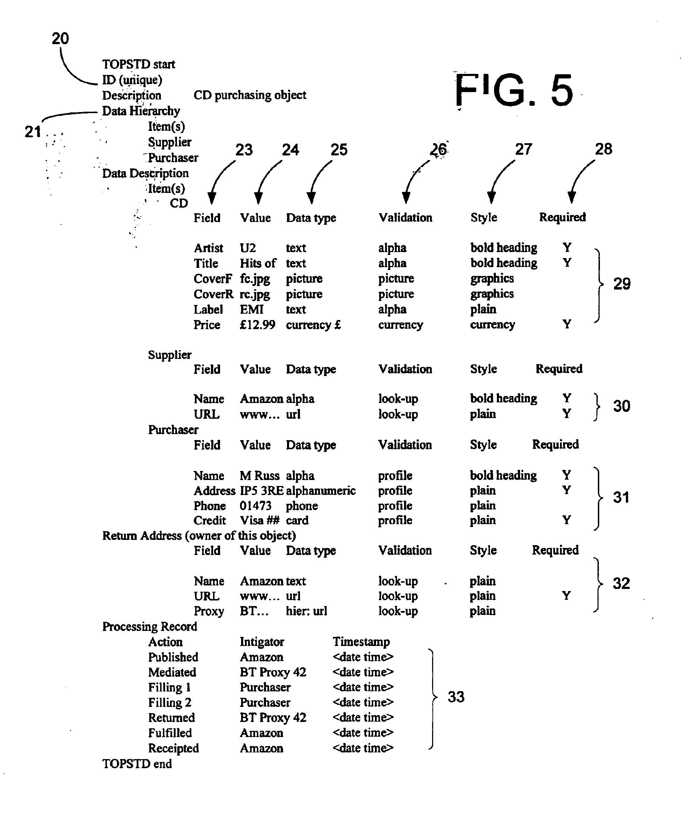

Figure 5 illustrates an example of a TD suitable for purchasing CDs. The TD is written in TOP format and may conveniently be written in XML. The TD has a unique identity (ID) 20 and an associated description - "CD purchasing object", in this example. The TD defines a number of data fields which are to be completed in order to provide a complete set of data for the transaction. The data includes a data hierarchy 21 which lists the categories of data included within the TD. In this example, the categories are the item to be purchased, the supplier and the purchaser.

The TD also includes a full data description 22 for the item to be purchased, a description 30 of the supplier and a description 31 of the purchaser. Thus, the item to be purchased, the CD, is specified in terms of the artist, title, pictures corresponding to the front and rear of the CD cover, the record label and the price are specified in field column 23. Appropriate values for these fields are provided in column 24. The type of data of the corresponding field is specified in column 25 using text picture or currency. Data checking may be carried out during the transaction according to validation data specified in column 26 for the fields concerned.

The TD also includes a style template to specify the look of the display of data on the browser of the client device 1. The style template is specified by data in column 27. Data in column 28 specifies whether the fields are essential fields for performing the transaction, in which case they are marked with the letter "Y" in this example. The data corresponding to the particular CD to be purchased is set out in rows 29.

Data corresponding to the supplier, namely the operator of server 2 is set out in rows 30.

Data rows 31 provide data corresponding to the purchaser i.e. the user of client device 1. The rows include the name, address, telephone number and credit card details of the purchaser.

Data rows 32 correspond to the return address for the TD, which in this instance comprises the URL of the proxy server 4.

Data rows 33 provide a record of processing of the TD, including when the TD was published by the server 2, and the various steps during which the TD is completed during the transaction as will be explained in more detail hereinafter.

Referring again to Figure 4, at step S4.5, the user of client device 1 interacts with the proxy 4 so as to complete the data fields of the TD. Some of the fields will have already been completed by the server 2 during step S4.2, e.g the title of the CD and corresponding information in rows 29. The various uncompleted fields of the TD are displayed to the user by means of a browser application running at client device 1 and the user operates the keyboard 7 and mouse 8 illustrated in Figure 2 in order to complete the data fields. Not all of the fields need to be completed in one session and the user is not required to complete the fields in any particular order. Instead, some of the fields may be completed and then the session can be terminated. If errors are made in entering data, the errors can be corrected in the same or a subsequent session. A record of the stages of completion are recorded in the processing record 33 as shown in Figure 5 so as to form part of the TD object. For example, as shown in Figure 5, the filling in of the form is specified as Filling 1 and Filling 2 that correspond to two TD data filling sessions performed by the user of client device 1.

Certain parts of the filling in process can be handled by a different proxy, referred to a micro-transactions herein. For example, when the user fills in their credit card details in rows 31, the credit-worthiness of the purchaser may be checked as a micro-transaction by interacting with the banking server 3. This allows the use of personal profiles and credentials to allow storage and retrieval of the required information for the micro transaction from a stored personal user profile, such that the user may only ever be asked for some of the data once after the data has been cached securely in the network by a trusted hosting provider or broker.

There is no need to complete all of the data fields during an individual session and instead the individual transaction data fields can be entered during different sessions, at different times. The interaction of the client 1 with the TD of proxy 4 is illustrated at steps S4.5 and S4.6 in Figure 4.

When the TD is completed, i.e. when all of its data fields are full of relevant data, a completed instance of the TD object is created. The instance of the TD is then sent by proxy 4 to the server 2 at step S4.7.

Thereafter, the processor 15 of the server 2 is able to execute the transaction on the basis of the data that has been entered onto the TD, since the data comprises an entire data set for performing the transaction. Upon completion of the transaction, instructions are sent on line 18 in the warehouse in order to dispatch the CD by mail or other courier service to the address of the purchaser specified in the TD instance. It will be understood that the processor 15 runs processes to print address labels, invoices, delivery notes and the like associated with the transaction. The execution of the transaction is illustrated at step S4.8 in Figure 4. Upon completion, a message is sent through the network 5 by server 2 to the client 1 at step S4.9.

Many modifications and variations of the described system fall within the invention. For example, the server 4 can provide a service in which TDs are collected from any servers 2, 2', etc. so that by accessing the server 4, the client device 1 can make a judgement on which server provides best terms and conditions associated with the goods and services e.g. the best price. The servers 2, 2' publish partially completed TDs with details of goods and services on offer in the TOP, using the common format to enable the server 4 to collate the and classify the goods and services, and offer them to potential customers. The data in the style template column 27 of Figure 5 can be used to display the individual goods and services on offer in a distinctive individual corporate style associated with respective servers 2, 2' etc.

Also, the proxy server 4 may hold in an internal database profile data concerning individual purchases in order to pre-fill the TD before communicating with the client device 1.

The use of the TD and the TOP has the advantage that no data need be lost during the process of gathering data to perform the transaction, if incorrect data is entered or verification process e.g. for a credit card or address details, indicate that some of the data is wrong and needs to be re-entered. According to the prior techniques, the data conversation between the client and server can result in data being lost whereas according to the present invention, the data can be collected during different sessions and in no particular order. Thus, details of the item, purchaser and supplier can be entered in a non-prescribed sequence and during different sessions if the purchaser so wishes, without any loss of data or data entry functionality.

Also, the use of TD and TOP allows people and software agents actually to run a transaction through and then withdraw it right at the very last step. This can be valuable in enabling a user to determine a best price by running the transaction across a set of service providers before committing to a particular supplier. This can be done either serially or in parallel, for example with different servers offering the same goods or services. Each server provides the user with an opportunity to confirm that the transaction is to be performed. This enables hidden charges to be revealed. For example, information on postage and packaging or other delivery charges and incidentals may not be disclosed to the purchaser up-front, whereas according to the invention, the user need not be committed to a purchase until the TD is dispatched to the server, at which time all such information will have been disclosed to the purchaser.

The asynchronous approach to transactions provided in accordance with the invention enables a transaction to be distributed and effectively resilient, being fully processed when all of the enabling micro transactions are complete. As such, an agent can process a transaction on behalf of a user in an environment where some servers and networks are not currently available, e.g. P2P and ad hoc networks.

The system described herein can readily provide audit trails and repudiation of particular transactions which are not acceptable to customers and also repudiation of customers with e.g. an unsatisfactory credit rating.

It will be understood that distributed sources of data to enable the transaction may be used, i.e. the service would work equally well with a group of people filling in the micro transactions and not necessarily just a single party initiating it.

## Claims

1. A method of performing a transaction between a client and a server, comprising:
providing a pre-defined transaction descriptor comprising a plurality of data fields to be completed by the user to provide a transaction descriptor instance of data for enabling performance of the transaction,
upon completion of the data fields of the transaction descriptor by a user of the client to provide the data descriptor instance, sending the transaction descriptor instance to the server, and
performing the transaction by means of the server using the data from the transaction descriptor instance.

2. A method according to claim 1 wherein the transaction descriptor comprises data fields for completion by the user and a style template to control display of the transaction descriptor to the user.

3. A method according to claim 1 or 2 including displaying the transaction descriptor to the user by means of the client, such that the user can complete the data fields in an order selected by the user.

4. A method according to claim 3 including storing a partially completed instance of the transaction descriptor, retrieving and completing said instance and sending the fully completed instance to the server.

5. A method according to any preceding claim including running a process at the server to create and partially complete data for the transaction descriptor.

6. A method according to any preceding claim including providing a proxy to provide the transaction descriptor and to store the descriptor when partially completed.

7. A method according to claim 6 including providing a further proxy for use in completing some of the data fields of the transaction descriptor.

8. A method according to any preceding claim including running a micro-transaction to validate at least some of the data entered in some of the data fields, and storing the validated data for use in future transactions.

9. A method according to any preceding claim including providing an audit trail for the transaction.

10. A method according to any preceding claim wherein prior to said server performing said transaction, said server provides said user with the opportunity to confirm said transaction is to be performed.

11. A method according to any preceding claim wherein said pre-defined transaction descriptor enables performance of a plurality of transactions.

12. A method according to claim 11 wherein said plurality of transactions are performed in series, wherein each server associated with a one of said plurality of transactions provides said user with an opportunity to confirm said transaction is to be performed.

13. A method as claimed in claim 11 or 12 wherein following the confirmation from the user that a transaction is to be performed, any remaining transactions are terminated.

14. A software object corresponding to a transaction descriptor as claimed in any preceding claim.

15. Data corresponding to the pre-defined transaction descriptor, to be offered to a client for completion to perform a transaction according to a method as claimed in any one of claims 1 to 13.

16. A computer program to be run to perform a method as claimed in any one of claims 1 to 13.

17. A network system configured to perform a method as claimed in any one of claims 1 to 13.

18. A client/server system for performing a transaction, operable to:
provide a pre-defined transaction descriptor comprising a plurality of data fields to be completed by the user to provide a transaction descriptor instance of data for enabling performance of the transaction, and
upon completion of the data fields of the transaction descriptor by a user of the client to provide the data descriptor instance, to send the transaction descriptor instance to the server, and
to perform the transaction by means of the server using the data from the transaction descriptor instance.

19. A proxy for use in performing a transaction between a client and a server, the proxy being operable to:
provide a pre-defined transaction descriptor comprising a plurality of data fields to be completed by the user to provide a transaction descriptor instance of data for enabling performance of the transaction,
upon completion of the data fields of the transaction descriptor by a user of the client to provide the data descriptor instance, to send the transaction descriptor instance to the server, and
to perform the transaction by means of the server using the data from the transaction descriptor instance.

20. A method of performing a transaction substantially as hereinbefore described with reference to the accompanying drawings.

21. A client/server system for performing a transaction, substantially as hereinbefore described with reference to the accompanying drawings.

22. A transaction descriptor substantially as hereinbefore described with reference to Figure 5 of the accompanying drawings.
